# EUROPÄISCHE PATENTANMELDUNG

(11) **EP 1 116 518 A2**
(43) Veröffentlichungstag der Anmeldung: **18.07.2001**
(21) Anmeldenummer: 00126665.9
(22) Anmeldetag: 05.12.2000
(51) Int. Cl.: B01J 19/24, B01J 8/02, C01B 3/58, C01B 3/38, C01B 3/32

(54) **Reformierungsreaktor in Schichtbauweise**

(30) Priorität: 13.01.2000 DE 10001064
(71) Anmelder: XCELLSIS GmbH, 73230 Kirchheim / Teck-Nabern (DE)
(72) Erfinder: Brauchle, Stefan, 72535 Heroldstatt (DE); Remsch, Tobias, 88410 Bad-Wurzach-Seibranz (DE); Heil, Dietmar, 88477 Schwendi (DE); Schmid, Wolfgang, 71067 Sindelfingen (DE)
(74) Vertreter: Kocher, Klaus-Peter Dipl.-Phys

(57) **Zusammenfassung**

2.1. Die Erfindung bezieht sich auf einen Reformierungsreaktor in Schichtbauweise mit einer alternierenden Folge je einer Reformierungsschicht, die mit einem Reformierungskatalysatormaterial für eine endotherme Reformierungsreaktion befüllt ist, und einer an diese über eine wärmeleitende Trennwand angrenzenden Heizschicht, die ein Heizraum-Katalysatormaterial für eine exotherme Reaktion beinhaltet.
2.2. Erfindungsgemäß ist das Volumen der jeweiligen Reformierungsschicht größer gewählt als dasjenige der jeweiligen Heizraumschicht, und das Heizraum-Katalysatormaterial ist als Wandbeschichtung in die jeweilige Heizschicht eingebracht.
2.3. Verwendung z.B. als Reformierungsreaktor zur Wasserstofferzeugung in einem Brennstoffzellenfahrzeug.

## Beschreibung

Die Erfindung bezieht auf einen Reformierungsreaktor in Schichtbauweise nach dem Oberbegriff des Anspruchs 1.

Derartige Reformierungsreaktoren werden beispielsweise zur Wasserstofferzeugung in einem Brennstoffzellenfahrzeug oder in stationären Anlagen durch endotherme Wasserdampfreformierung eines Kohlenwasserstoffs oder Kohlenwasserstoffderivats, wie Methanol, eingesetzt. Dazu wird das umzusetzende Stoffgemisch in die einen oder mehreren Reformierungsschichten eingeleitet, die sich in einer entsprechenden Schichtfolge mit je einer Heizschicht abwechseln. In der jeweiligen Heizschicht wird im Reaktorbetrieb eine exotherme Reaktion durchgeführt, um die zur endothermen Reformierung in der oder den Reformierungsschichten nötige Wärme bereitzustellen. Der Wärmeübergang von einer jeden Heizschicht in die eine oder beiden benachbarten Reformierungsschichten erfolgt über eine jeweilige, zur strömungstechnischen Trennung der Schichten vorgesehene, gut wärmeleitende Trennwand. Die eine oder mehreren Heizschichten enthalten ein geeignetes Heizraum-Katalysatormaterial, das die vorgesehene exotherme Reaktion katalysiert. Je nach Bedarf können sie z.B. als katalytischer Brenner, dem ein geeignetes Brennstoff/Sauerstoff-Gemisch zugeführt wird, oder als CO-Oxidationsstufe ausgelegt sein, welcher das durch die Reformierungsreaktion erzeugte Reformatgas zugeführt wird, um in ihm enthaltenes Kohlenmonoxid durch selektive CO-Oxidation zu entfernen.

Reformierungsreaktoren dieser Art sind in vielerlei Ausprägungen bekannt, insbesondere in Plattenbauweise, siehe beispielsweise die Offenlegungsschriften DE 197 27 589 A1, EP 0 642 184 A2 und EP 0 691 701 A1 sowie die Patentschriften US 4.933.242, US 5.015.444 und US 5.180.561. Alternativ zur Plattenbauweise mit ebenen Schichtlagen sind auch andere Schichtbauarten möglich, z.B. zylinderringförmige Schichten, die von koaxial ineinanderliegenden Rohren definiert sind.

Bei den herkömmlichen Reformierungsreaktoren der eingangs genannten Art ist meist bei gleicher Schichtfläche die Schichthöhe der Reformierungsschichten etwa gleich groß oder in manchen Fällen sogar etwas kleiner gewählt als diejenige der Heizschichten, d.h. das Volumen der jeweiligen Reformierungsschicht ist allenfalls etwa gleich groß wie das Volumen der jeweiligen Heizschicht.

Speziell auch im Anwendungsfall von Brennstoffzellenfahrzeugen ist wegen des begrenzten Bauraums ein möglichst kompakter Aufbau des Reformierungsreaktors erwünscht. Andererseits sollte das Volumen der Reformierungsschichten ausreichend groß gehalten werden, um eine ausreichende Menge an Reformierungskatalysatormaterial einbringen zu können und die Menge an nicht umgesetztem Kohlenwasserstoff- bzw. Kohlenwasserstoffderivat-Einsatzstoff im erzeugten Reformatgas gering zu halten.

Der Erfindung liegt als technisches Problem die Bereitstellung eines Reformierungsreaktors der eingangs genannten Art zugrunde, der sich bei gegebener, geforderter Reformierungsleistung möglichst kompakt und mit geringem Aufwand bauen läßt und sich insbesondere auch zur Erzeugung eines wasserstoffreichen Gases zur Speisung von Brennstoffzellen eignet.

Die Erfindung löst dieses Problem durch die Bereitstellung eines Reformierungsreaktors mit den Merkmalen des Anspruchs 1. Die Schichtbauweise ist bei diesem Reaktor charakteristischerweise so gewählt, daß das Volumen der jeweiligen Reformierungsschicht größer ist als dasjenige der jeweiligen Heizschicht. Gleichzeitig ist das Heizraum-Katalysatormaterial raumsparend als Wandbeschichtung in die jeweilige Heizschicht eingebracht.

Das Anbringen des Heizraum-Katalysatormaterials als Wandbeschichtung macht es möglich, die Heizraumschichten relativ kleinvolumig auszuführen, indem keine das Volumen der Heizschichten füllende Belegung mit Katalysatormaterial z.B. in Form einer Pelletschüttung benötigt wird. Damit steht im wesentlichen das ganze Volumen der jeweiligen Heizschicht für eine zugehörige Heizmediumströmung zur Verfügung, wofür schon eine deutlich geringere Schichthöhe, d.h. Schichtweite, genügen kann als im Fall einer raumfüllenden Belegung mit Heizraum-Katalysatormaterial. Andererseits kann im relativ großen Volumen des oder der Reformierungsschichten entsprechend viel Reformierungskatalysatormaterial z.B. in Form einer Pelletschüttung eingebracht und dadurch eine hohe Reformierungsumsatzleistung bereitgestellt werden. Das vergleichsweise große, von der oder den Reformierungsschichten bereitgestellte Reformierungsreaktionsraumvolumen gewährleistet zudem, daß keine zu hohen Mengen an nicht umgesetztem Einsatzstoff im Reformatgas verbleiben.
In einer vorteilhaften Weiterbildung der Erfindung nach Anspruch 2 ist das Volumen der jeweiligen Reformierungsschicht mindestens doppelt so groß gewählt wie dasjenige der jeweiligen Heizschicht, so daß dementsprechend mindestens zwei Drittel des verfügbaren Volumens der Reaktorschichtung aus einer Folge je einer Reformierungsschicht und einer Heizschicht für die Durchführung der endothermen katalytischen Reformierungsreaktion zur Verfügung stehen.

Bei einem nach Anspruch 3 weitergebildeten Reformierungsreaktor fungieren die einen oder mehreren Heizschichten als ein katalytischer Brenner oder als eine CO-Oxidationsstufe, wobei sie im letzteren Fall neben der Wärmebereitstellung für die Reformierungsreaktion gleichzeitig eine Gasreinigungsfunktion erfüllen, indem sie im Reformatgas enthaltenes Kohlenmonoxid durch selektive Oxidation aus selbigem entfernen.

In einer Weiterbildung der Erfindung nach Anspruch 4 ist die jeweilige Heizschicht vom Innenraum eines Paares aneinanderliegender Wellprofilplatten gebildet. In einer fertigungstechnisch einfachen Realisierung können hierzu identische Wellprofilplatten verwendet werden, die mit sich überkreuzenden Wellprofillängsachsen aneinandergelegt werden. Dies verleiht der Heizschicht zugleich einen strukturierten Strömungsquerschnitt, der zudem durch Wahl einer entsprechend niedrigen Wellprofilhöhe relativ klein gehalten werden kann. Dies hat vorteilhafterweise hohe Strömungsgeschwindigkeiten in der jeweiligen Heizschicht zur Folge, die zu erwünschten turbulenten Strömungen des hindurchströmenden Heizmediums und damit zu einem hohen Wärmeübertragungswirkungsgrad führen. Je zwei heizschichtbildende Wellprofilplattenpaare sind unter Belassung eines Zwischenraums zur Bildung einer jeweiligen Reformierungsschicht voneinander beabstandet angeordnet, so daß wie gewünscht die Weite und damit das Volumen der Reformierungsschicht größer als dasjenige der Heizschicht ist.

Bei einem nach Anspruch 5 weitergebildeten Reformierungsreaktor sind in die jeweilige Reformierungsschicht Stützelemente eingelegt, um die Plattenwände, welche die Reformierungsschicht begrenzen, gegeneinander abzusützen und auf diese Weise die Reaktorschichtung insgesamt gegenüber auftretenden Druckunterschieden zwischen einzelnen Schichten zu versteifen und dadurch die Strömungsquerschnitte der einzelnen Schichten konstant zu halten. Derselbe Effekt wird bei einem nach Anspruch 6 weitergebildeten Reformierungsreaktor dadurch erzielt, daß an den Begrenzungsplatten einer jeweiligen Reformierungsschicht an bestimmten Stellen Abstandshalter ausgebildet sind.

Vorteilhafte Ausführungsformen der Erfindung sind in den Zeichnungen dargestellt und werden nachfolgend beschrieben. Hierbei zeigen:
- Fig. 1: eine Draufsicht auf einen Reformierungsreaktor in Plattenbauweise,
- Fig. 2: eine Schnittansicht längs der Linie II-II von Fig. 1,
- Fig. 3: eine ausschnittweise Schnittansicht längs der Linie III-III von Fig. 1,
- Fig. 4: eine Schnittansicht längs der Linie IV-IV von Fig. 1 und
- Fig. 5: eine Schnittansicht längs der Linie V-V von Fig. 1.

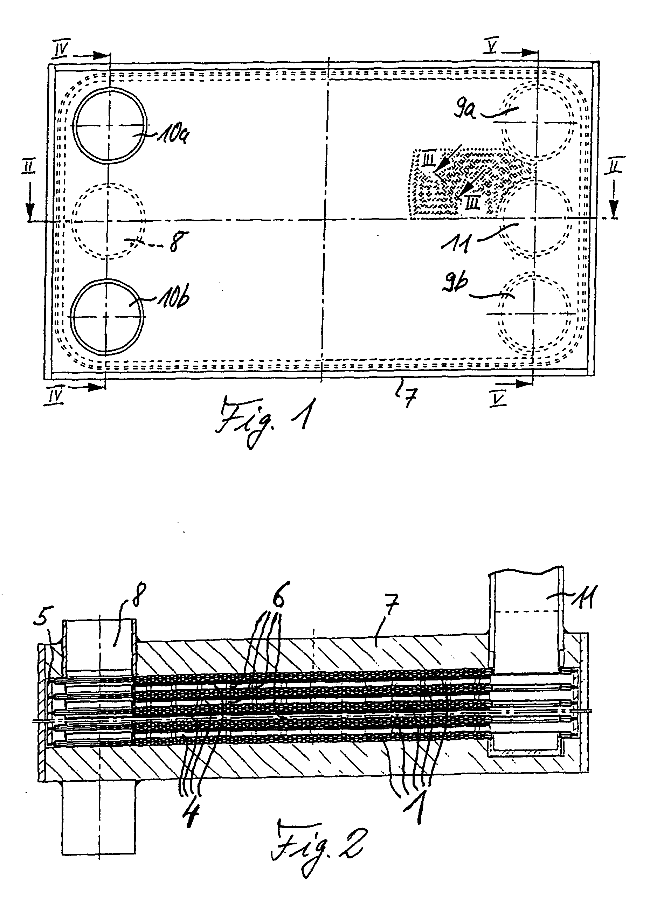

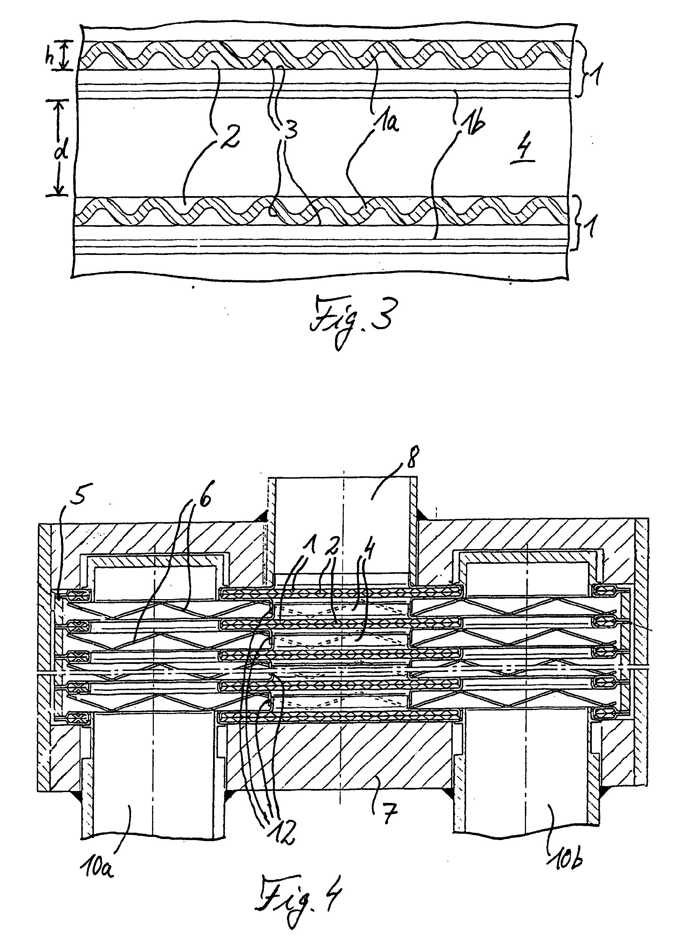

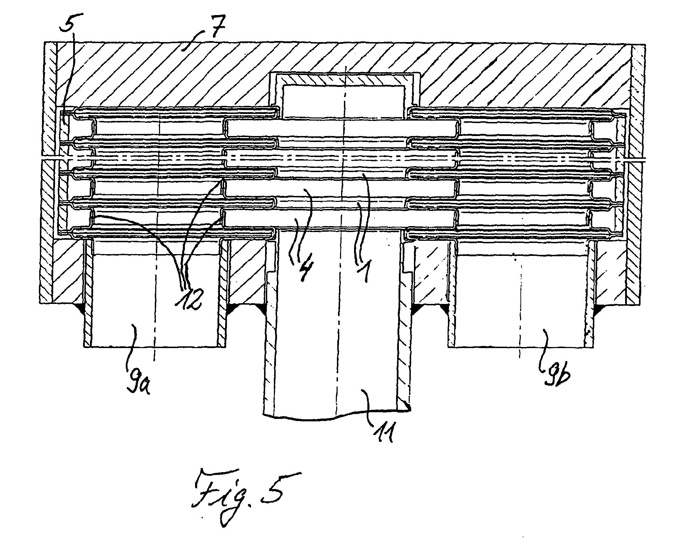

Das in den Fig. 1 bis 5 in verschiedenen Ansichten gezeigte Reformierungsreaktormodul ist in Schichtbauweise aus ebenen, aufeinandergestapelten Plattenelementen gefertigt und eignet sich beispielsweise zur Erzeugung von Wasserstoff für die Speisung von Brennstoffzellen eines Brennstoffzellenfahrzeugs durch endotherme Wasserdampfreformierung von Methanol oder einem anderen Kohlenwasserstoff oder Kohlenwasserstoffderivat. Wie aus den Schnittdarstellungen der Fig. 2 bis 5 ersichtlich, besteht der Schichtstapel aus einer beliebigen, wählbaren Anzahl von Wellprofilplattenpaaren 1, wobei jedes Paar aus zwei Wellprofilplatten 1a, 1b besteht, deren Wellstruktur so orientiert ist und die so aufeinandergelegt sind, daß sich die Längsachsen ihrer jeweiligen Wellstruktur unter einem Winkel von 90° kreuzen, alternativ unter irgendeinem anderen Winkel ungleich null.

Dadurch definieren die beiden Wellprofilplatten 1a, 1b jedes Paares 1 einen zwischenliegenden Innenraum 2 mit entsprechender, sich überkreuzender Wellstruktur seiner beidseitigen Begrenzungswände in Stapelrichtung, der als jeweilige Heizschicht ausgelegt ist. Dazu sind die beiden Wellprofilplatten 1a, 1b jedes Paares 1 wenigstens auf ihrer Innenseite mit einer Wandbeschichtung 3 eines Heizraum-Katalysatormaterials versehen, das eine in der jeweiligen Heizschicht 2 durchzuführende exotherme und damit wärmeerzeugende Reaktion katalysiert. Bei dieser exothermen Reaktion kann es sich je nach Anwendungsfall z.B. um eine katalytische Verbrennungsreaktion eines zugeführten Brennstoff/Sauerstoff-Gemischs oder um eine selektive Oxidation von Kohlenmonoxid handeln, das im durch die Reformierungsreakton gebildeten Reformatgas enthalten ist. Geeignete Brennstoffe, z.B. derselbe Einsatzstoff wie derjenige für die Reformierung, und Heizraum-Katalysatormaterialien zur Katalysierung einer solchen exothermen Reaktion sind dem Fachmann geläufig.

Je zwei Wellprofilplattenpaare 1 sind unter Belassung eines Zwischenraums 4 stapelweise angeordnet, der als jeweilige Reformierungsschicht ausgelegt ist, in der die gewünschte endotherme Reformierungsreaktion durchgeführt wird und die zu diesem Zweck mit einem geeigneten, der Übersichtlichkeit halber nicht explizit gezeigten Reformierungskatalysatormaterial befüllt ist, vorzugsweise in Form einer Katalysatorpelletschüttung.

Somit wechseln sich im Reaktorstapel je eine Heizschicht 2 und eine Reformierungsschicht 4 ab. Die Heizschichten 2 erzeugen die zur Durchführung der Reformierungsreaktion benötigte Wärme, die zu diesem Zweck über die Wellprofilplatten 1a, 1b in die Reformierungsschichten 4 übertragen wird. Dazu bestehen die Wellprofilplatten 1a, 1b aus gut wärmeleitendem Material, z.B. aus einem Metallblech. Um die Strömungsquerschnitte der einzelnen Schichten 2, 4 gegenüber eventuellen Eigenspannungen der Wellprofilplatten 1a, 1b und Druckunterschieden in den verschiedenen Schichten 2, 4 konstant zu halten, sind je zwei Wellprofilplattenpaare 1 durch randseitige Halteelemente 5 im Abstand voneinander gehalten, und zudem sind in die Reformierungsschichten 4 jeweils eine Reihe von Abstandsstegen 6 mit gewinkelter Wellstruktur als Abstützelemente in geeigneten Abstand quer zur Stapelrichtung eingebracht.

Wie aus den Fig. 1, 2, 4 und 5 erkennbar ist, sind die Wellprofilplatten 1a, 1b rechteckförmig, und der Plattenstapel befindet sich in einem entsprechend rechteckförmigen Gehäusekörper 7, in dem an den Schmalseiten geeignete Anschlußstrukturen eingebracht sind, d.h. Verteiler- und Sammelkanäle zur parallelen Zu- und Abführung der beiden Medien in bzw. aus den verschiedenen Heizschichten 2 einerseits und der zu diesen alternierend im Stapel angeordneten Reformierungsschichten 4 andererseits. Speziell sind ein Heizraumeinlaß 8 zur Zuführung des in den Heizschichten 2 umzusetzenden Stoffstroms, zwei Heizraumauslässe 9a, 9b zur Abführung des zugehörigen Produktgases aus den Heizschichten 2, zwei Reformierungseinlässe 10a, 10b zur Zuführung des in den Reformierungsschichten 4 umzusetzenden Stoffgemischs und ein Reformierungsauslaß zur Abführung des erzeugen Reformatgases vorgesehen, jeweils mit zur Stapelrichtung paralleler Längsachse. Im Bereich der verschiedenen Ein- und Auslässe 8 bis 11 sind in den Wellprofilplatten 1a, 1b entsprechende Durchlaßöffnungen gebildet, an deren Randbereich geeignete, im Querschnitt abgewinkelte Abschlußbleche 12 derart vorgesehen sind, daß die benötigte Fluidtrennung zum einen zwischen den Heizschichten 2 und den Reformierungsschichtanschlüssen 10a, 10b, 11 und zum anderen zwischen den Reformierungsschichten 4 und den Heizschichtanschlüssen 8, 9a, 9b gewährleistet ist.

Wie insbesondere aus den Fig. 2 bis 4 ersichtlich, ist die Höhe h der Wellstruktur der Wellprofilplatten 1a, 1b deutlich kleiner gewählt als der lichte Abstand d je zweier Wellprofilplattenpaare 1. Dies hat zur Folge, daß die effektive Höhe und damit das Volumen der Reformierungsschichten 4 um ein Mehrfaches größer ist als die effektive Höhe und damit das Volumen bzw. der freie Strömungsquerschnitt der Heizschichten 2. Bevorzugt ist die Dimensionierung so gewählt, daß das mit dem Reformierungskatalysatormaterial belegbare Volumen der Reformierungsschichten 4 mindestens doppelt so groß, im gezeigten Fall z.B. etwa viermal so groß ist wie das durchströmbare Volumen der Heizschichten 2.

Diese Maßnahme ermöglicht bei gegebener, geforderter Reformierungsleistung eine vergleichsweise kompakte Bauweise des Reaktormoduls. Das vergleichsweise große, den Reformierungsreaktionsraum bildende Gesamtvolumen der Reformierungsschichten 4 erlaubt die Einbringung einer großen Menge an Reformierungskatalysatormaterial, was gewährleistet, daß keine oder allenfalls geringe, tolerierbare Rückstände an zu reformierendem Einsatzstoff im Reformatgas verbleiben. Andererseits reicht das als Heizraum fungierende Gesamtvolumen der Heizschichten 2 noch aus, die zur Reformierung benötigte Wärme zu erzeugen, wobei durch das Einbringen des Heizraum-Katalysatormaterials als Wandbeschichtung trotz der geringen Höhe h der Heizschichten 2 noch ausreichend freier Strömungsquerschnitt verbleibt. Der strukturierte und relativ geringe Strömungsquerschnitt jeder Heizraumschicht 2 hat zudem den erwünschten Effekt, daß er zu hohen Strömungsgeschwindigkeiten und damit zu turbulenten Strömungen des hindurchströmenden Heizmediums führt, was für den Wirkungsgrad der Wärmeübertragung günstig ist.

Es versteht sich, daß neben dem gezeigten Ausführungsbeispiel weitere Realisierungen des erfindungsgemäßen Reformierungsreaktors möglich sind. So können statt der Wellprofilplatten mit sich überkreuzenden Wellprofillängsachsen alternativ je zwei Wellprofilplatten mit parallelen Wellprofillängsachsen zur Bildung einer zwischenliegenden Heizschicht vorgesehen sein, d.h. die Wellprofilplatten berühren sich dann nicht nur in einem gleichmäßig verteilten Punktmuster, wie dies im gezeigten Beispiel der Fall ist, sondern längs aneinanderstoßender Wellenberglinien, während die einander gegenüberliegenden Wellentäler einen jeweiligen Heizschichtkanal definieren. Weiter versteht sich, daß statt der gezeigten sinusförmigen Wellstruktur Wellprofilplatten mit einer beiliebig anderen, herkömmlichen Wellstruktur verwendet werden können. Des weiteren kann statt der rechteckförmigen Gestalt jede andere Außenkontur für den Plattenstapel vorgesehen sein. Statt der gezeigten Plattenbauweise ist alternativ auch eine andere Schichtbauweise für den erfindungsgemäßen Reaktor möglich, z.B. in Form von radial alternierenden Reformierungs- und Heizschichten eines aus konzentrisch ineinanderliegenden Röhren aufgebauten Moduls.

Zur Konstanthaltung der Strömungsquerschnitte der einzelnen Schichten, d.h. insbesondere des Abstands je zweier Wellprofilplattenpaare, kann alternativ zu den gezeigten Abstützstegen 6 vorgesehen sein, je zwei Wellprofilplatten jedes Wellprofilplattenpaares an ihren Stoßstellen miteinander fest zu verbinden, z.B. durch Schweißen oder Löten. Als weitere Maßnahme zur Stabilisierung der Schichtstruktur kann vorgesehen sein, an den Wellprofilplatten auf deren Reformierungsschichtseite Abstandshalter auszubilden, z.B. daran anzuformen oder in diese einzuprägen, mit denen sich die zwei einander zugewandten Wellprofilplatten benachbarter Wellprofilplattenpaare mit ihren Reformierungsschichtseiten an entsprechenden Punkten gegeneinander abstützen. Es versteht sich, daß auch beliebige Kombinationen der genannten Abstütz- bzw. Stabilisierungsmaßnahmen möglich sind.

Für den Fall, daß die Heizschichten als CO-Oxidationsstufe ausgelegt sind, wird durch eine entsprechende Rohrleitungsstruktur das aus dem oder den Reformierungsauslässen austretende Reformatgas in die Heizeinlässe eingeleitet. Das Reformatgas wird dann in den Heizschichten von störendem Kohlenmonoxid durch eine selektive CO-Oxidation befreit. Das derart von CO gereinigte Reformatgas kann dann insbesondere zur Speisung von Brennstoffzellen z.B. in einem Brennstoffzellenfahrzeug dienen.

Weiter versteht sich, daß die jeweilige Heizschicht nicht unbedingt, wie gezeigt, von einem Wellprofilplattenpaar, sondern alternativ auch von zwei anderen Plattenelementen definiert sein kann, z.B. von zwei ebenen Plattenelementen. Diese stehen sich dann mit geringerem Abstand gegenüber als die jeweils eine Reformierungsschicht begrenzenden beiden Plattenelemente und können heizschichtseitig mit Turbulenzelementen versehen sein. Statt an den Plattenelementen selbst ausgebildeten Turbulenzelementen kann auch eine Turbulenzeinlage zwischen den beiden Plattenelementen in die jeweilige Heizschicht eingebracht sein.

## Patentansprüche

1. Reformierungsreaktor in Schichtbauweise, insbesondere zur Wasserstofferzeugung in einem Brennstoffzellenfahrzeug, mit
- einer alternierenden Folge je einer Reformierungsschicht (4), die mit einem Reformierungskatalysatormaterial für eine endotherme Reformierungsreaktion befüllt ist, und einer an diese über eine wärmeleitende Trennwand (1a, 1b) angrenzenden Heizschicht (2), die ein Heizraum-Katalysatormaterial für eine exotherme Reaktion beinhaltet,
**dadurch gekennzeichnet**, **daß**
- das Volumen der einen oder mehreren Reaktionsschichten (4) größer gewählt ist als das Volumen des oder der Heizschichten (2) und
- das Heizraum-Katalysatormaterial als Wandbeschichtung (3) in die jeweilige Heizschicht eingebracht ist.

2. Reformierungsreaktor nach Anspruch 1, weiter
**dadurch gekennzeichnet**, **daß**
das Reformierungsschichtvolumen mindestens doppelt so groß ist wie das Heizschichtvolumen.

3. Reformierungsrekator nach Anspruch 1 oder 2, weiter
**dadurch gekennzeichnet, daß**
die eine oder mehreren Heizschichten (2) als ein katalytischer Brenner oder als eine CO-Oxidationsstufe zur selektiven Oxidation von Kohlenmonoxid ausgelegt sind, das im Reformatgas enthalten ist, welches in der oder den Reformierungsschichten (4) erzeugt wird.

4. Reformierungsreaktor nach einem der Ansprüche 1 bis 3, weiter
**dadurch gekennzeichnet, daß**
die jeweilige Heizschicht (2) vom Innenraum eines Paares (1) aneinanderliegender Wellprofilplatten (1a, 1b) gebildet ist und
- je zwei Wellprofilplattenpaare unter Belassung eines Zwischeraums, der eine jeweilige Reformierungsschicht (4) bildet, voneinander beabstandet angeordnet sind.

5. Reformierungsreaktor nach einem der Ansprüche 1 bis 4, weiter
**dadurch gekennzeichnet, daß**
in die jeweilige Reformierungsschicht (4) Abstützelemente (6) zur Abstützung der angrenzenden Trennwände (1a, 1b) eingebracht sind.

6. Reformierungsreaktor nach einem der Ansprüche 1 bis 5, weiter
**dadurch gekennzeichnet, daß**
an den Trennwänden (1a, 1b) auf deren Reformierungsschichtseite Abstandshalter ausgebildet sind, über die sich je zwei gegenüberliegende Trennwände einer Reformierungsschicht (4) gegeneinander abstützen.
